(19) Europäisches Patentamt

European Patent Office

Office européen des brevets

(11) **EP 0 663 562 B1**

(12) **EUROPÄISCHE PATENTSCHRIFT**

(45) Veröffentlichungstag und Bekanntmachung des Hinweises auf die Patenterteilung:
**31.01.2001 Patentblatt 2001/05**

(51) Int Cl.⁷: **F23C 6/04**, F23D 14/32, F23D 14/78, F23D 14/66

(21) Anmeldenummer: **94202773.1**

(22) Anmeldetag: **27.09.1994**

(54) **Verfahren zur Reduzierung von Schadgasemissionen bei der Verbrennung und Brenner dafür**

Process and burner for reducing harmful gas emissions during combustion

Procédé et brûleur pour la réduction des émissions des gaz nocifs pendant la combustion

(84) Benannte Vertragsstaaten:
**AT BE DE FR GB IT**
Benannte Erstreckungsstaaten:
**SI**

(30) Priorität: **13.01.1994 DE 4400831**

(43) Veröffentlichungstag der Anmeldung:
**19.07.1995 Patentblatt 1995/29**

(73) Patentinhaber: **MESSER GRIESHEIM GMBH**
**60547 Frankfurt (DE)**

(72) Erfinder:
• **Franke, Heinz**
**D-47823 Krefeld (DE)**
• **Pfeuster, Michael**
**D-40878 Ratingen (DE)**
• **Hamberger, Ralf**
**D-47798 Krefeld (DE)**

(56) Entgegenhaltungen:
**EP-A- 0 038 257**     **WO-A-88/04012**
**WO-A-90/02907**     **WO-A-91/06804**

**Beschreibung**

Die Erfindung betrifft ein Verfahren zur Reduzierung von Schadgasemissionen bei der Verbrennung nach dem Oberbegriff des Anspruches 1 und einen Brenner zur Durchführung des Verfahrens nach dem Oberbegriff des Anspruches 8. Ein solches Verfahren und Brenner sind aus Dokument WO-A-8 804 012 schon bekannt.

Verbrennungsprozesse, die mit Sauerstoff als Oxidationsmittel arbeiten, wurden in der Vergangenheit immer dann angewendet, wenn die Leistungssteigerung einer Ofenanlage, die Einsparung von Primärenergie oder die Reduzierung des Volumens der Verbrennungsabgase gefordert waren. Neben diesen hauptsächlichen Vorteilen einer Sauerstoffanwendung wurden das Zündverhalten und die Flammenstabilität verbessert und es können höhere Prozeßtemperaturen erreicht werden.

Die Verbrennungsprozesse wurden in der Vergangenheit vorrangig hinsichtlich des Ausbrandes optimiert, indem die entstehenden CO-Gase und CH-Verbindungen vollständig verbrannt wurden.

Die um 800 bis 1000°C höheren adiabatischen Flammentemperaturen bei Einsatz von technisch reinem Sauerstoff gegenüber einer Brennstoff/Luft-Verbrennung führen zu einer starken Stickstoff-Oxid (NOx)-Bildung.

Die als Nebenprodukte bei der Verbrennung anfallenden Stickstoffoxide werden als Ursache für sauren Regen und die verstärkte Ozonbildung (Schädigung der Wälder und Menschen) angesehen.

Obwohl die Abhängigkeiten und qualitativen Anteile der NOx-Bildungsmechanismen noch nicht vollständig geklärt sind, gilt heute als sicher, daß die Flammentemperatur > 1300°C, die Verweilzeit des Sauerstoffs bei hohen Temperaturen und der Sauerstoffpartialdruck die hauptsächlichsten Einflußgrößen der thermischen NOx-Bildung sind.

Gleichzeitig wird NOx auf der Basis des im Brennstoff organisch gebundenen Stickstoffs gebildet. Ferner kommt es zur Promt-NO-Bildung, indem freier Sauerstoff während des Verbrennungsablaufes reagiert.

Die Hauptanforderungen, die an eine schadstoffarme Verbrennung gestellt werden, wie stabiles Zündverhalten, Ermöglichung großer Regelbereiche ohne Flammeninstabilitäten und Gewährleistung eines vollständigen Ausbrandes haben die Verbrennungskonzepte und die Gesichtspunkte der notwendigen Brennerkonstruktionen maßgeblich beeinflußt.

Bei den bisher bekannten schadstoffarmen Verbrennungsverfahren und den dazugehörigen Verbrennungseinrichtungen handelt es sich um NOx-Minderungsmaßnahmen der nahstöchiometrischen Verbrennung, Vermeidung von Flammentemperaturspitzen durch Rezirkulation von Verbrennungsabgasen in die Verbrennungszone sowie eine mehrstufige Verbrennung durch Aufteilung der benötigten Sauerstoffmenge auf mindestens zwei Teilströme.

Durch wissenschaftliche Untersuchungen konnte im letzten Jahrzehnt bestätigt werden, daß die Flammentemperaturspitzen die Hauptursache für die thermische NOx-Bildung sind. Hieraus ergab sich die Forderung, eine wirksame Flammenkühlung zu schaffen. Die Flammen können durch Rezirkulation von Verbrennungsabgasen und Einmischung in die Verbrennungszone oder durch Einbauten in der Verbrennungszone gekühlt werden. Die Einbauten sind starken Hitzeeinwirkungen ausgesetzt, so daß sie einem hohen Verschleiß unterliegen.

Bei einem bekannten Verbrennungskonzept zur schadgasarmen Verbrennung mit Sauerstoff wurde eine impulsreiche Srömung des Hauptsauerstoffstromes zur Rezirkulation der Verbrennungsabgase vorgesehen.

Zur Erzeugung der impulsreichen Strömung des Hauptsauerstoffstromes wurden Lavaldüsen vorgeschlagen (US-Patent 5 104,310), bei denen die Druckenergie in Geschwindigkeit umgesetzt wird.

Als Nachteile ergeben sich die hohen Herstellungskosten dieser Brenner sowie der ungenügende Regelbereich des Brenners. Geringe Schadgasemissionen werden vorrangig für den Auslegungszustand erreicht, da die Lavaldüsen nur in einem engen Bereich optimal arbeiten.

Bei den bekannten Verbrennungsverfahren zur schadgasarmen Verbrennung werden zur Flammenstabilisierung mindestens 5 bis 10 % des zur stöchiometrischen Verbrennung erforderlichen Sauerstoffes benötigt. Durch diese großen Sauerstoffmengen wird im Bereich der Flammenwurzel zusätzlich NOx gebildet.

Der Einsatz von Brennersteinen zur Flammenstabilität bei gleichzeitiger Reduzierung der Primärsauerstoffmengen auf 1 bis 5 % führt zu zusätzlichen Kosten, da die Brennersteine aus hochwertigen Materialien bestehen und aufgrund der hohen thermischen Belastungen einem voreilenden Verschleiß ausgesetzt sind.

Die bisher bekannten Verfahren zur schadgasarmen Verbrennung erfüllen die gestellten Forderungen in bezug auf verminderte NOx-Schadgasemissionen bei gleichzeitiger wirtschaftlicher Ausnutzung des Brennstoffes (kein unverbrannter Brennstoff) nur zum Teil. Sie arbeiten somit nur in einem begrenzten Bereich wirtschaftlich.

Der Erfindung liegt die Aufgabe zugrunde, ein Verfahren und eine Vorrichtung zu schaffen, die eine Oxidation von Brennstoff mit einem überwiegend sauerstoffhaltigen Oxidationsmittel unter wirtschaftlichen Bedingungen bei gleichzeitig geringerer Schadstoffbildung (NOx) über einen großen Regelbereich ermöglichen.

Erfindungsgemäß wird diese Aufgabe bei einem gattungsgemäßen Verfahren durch die kennzeichnenden Merkmale des Anspruches 1 und bei einem Brenner zur Durchführung des Verfahrens durch die kennzeichnenden Merkmale des Anspruches 8 gelöst.

Vorteilhafte Weiterbildungen der Erfindung sind in den Unteransprüchen angegeben.

Die Erzielung eines größtmöglichen zusätzlichen Gewinnes an einer impulsreichen Strömung des Hauptsauerstoffstromes, der zur Rezirkulation der Verbrennungsabgase erforderlich ist, wird erfindungsgemäß dadurch erreicht, daß das sauerstoffhaltige Oxidationsmittel mit einem Mindestsauerstoffgehalt von 90 % auf eine Temperatur größer 100°C durch die Verbrennungsabgase oder durch eine externe Einrichtung vorgewärmt wird. Damit kann ein auf die Verbrennungsleistung bezogene impulsreiche Strömung von mindestens 23,6 N/MW erzeugt werden. Die für die Einmischung der Verbrennungsabgase erforderliche impulsreiche Strömung des Hauptsauerstoffstromes wird bei Leistungsänderungen des Brenners (Verringerung der Menge des Hauptsauerstoffstromes) durch Erhöhung der Vorwärmtemperatur im Regelbereich von 1 : 8 nahezu ausgeglichen.

Damit wird die impulsreiche Strömung des Hauptsauerstoffstromes auch bei Laständerungen des Brenners gesichert, so daß unabhängig vom Lastbereich die NOx-und CO-Emissionen konstant gering bleiben.

Durch die konstruktive Ausbildung der Düsen für den Hauptsauerstoffstrom mit einem auf die Verbrennungsleistung bezogenen Austrittsquerschnitt von mindestens 350 mm$^2$/MW wird gewährleistet, daß sich die Strömungsverhältnisse den sich verändernden Leistungen des Brenners anpassen und somit entscheidend die wirtschaftliche Ausnutzung des Brennstoffes unter umwelttechnisch zufriedenstellenden Bedingungen ermöglichen, wobei über den gesamten Regelbereich ein stabiles Flammensignal zur sicherheitstechnischen Überwachung des Brenners gegeben ist.

Durch die erfindungsgemäße Anordnung der Hauptsauerstoffdüsen sind günstige Voraussetzungen geschaffen worden, daß der Außendurchmesser des Brenners klein dimensioniert werden kann.

Durch die erfindungsgemäße Anordnung und Dimensionierungen des Zuleitungskanals für den Primärsauerstoffstrom im wassergekühlten Zuleitungskanal für den Brennstoff sowie die vorgegebene Primärsauerstofftemperatur von ≤ 30°C wird erreicht, daß eine stabile Zündflamme mit kleinen Mengen an Primärsauerstoff garantiert wird, die ein ausreichendes UV-Signal zur Überwachung des Brenners liefert. Damit werden Temperaturspitzen in der Flammenwurzel durch den geringen Primärsauerstoffstrom bei weit unterstöchiometrischer Verbrennung vermieden. Auf den Einsatz von Brennersteinen kann verzichtet werden.

Die erfindungsgemäße Ausbildung des wassergekühlten Zuleitungskanals für Brennstoff und der auf die Verbrennungsleistung bezogene Brennstoff-Impulsstrom vermeiden in Verbindung mit der Temperatur des Primärsauerstoffstromes von ≤ 30°C sowie dem geringen Anteil des Primärsauerstoffstromes von < 1 % der stöchiometrisch benötigten Sauerstoffmenge Temperaturspitzen in der Flammenwurzel und damit Schadstoffemissionen. Die Flamme wird stabil am Austritt gehalten und brennt mit niedriger Flammentemperatur.

Das erfindungsgemäße Verfahren und der erfindungsgemäße Brenner reduzieren die Schadgasemissionen und eignen sich besonders durch eine stabile und vollständige Verbrennung zur Beheizung von Industrieöfen. Die verschärften Grenzwerte für Stickoxide und Kohlenmonoxid werden weit unterschritten, so daß ein wirtschaftliches Arbeiten der gesamten Ofenanlage unter umweltschonenden Bedingungen erreicht wird.

Das neue Verfahren kann mit gasförmigem und/oder flüssigem zerstäubten Brennstoff durchgeführt werden.

Die Erfindung soll nachstehend an Ausführungsbeispielen näher erläutert werden. Im folgenden sind Ausführungsbeispiele der erfindungsgemäßen Brenner in den Zeichnungen schematisch dargestellt.

Es zeigen

Fig. 1 einen Schnitt durch einen Brenner zur Durchführung des Verfahrens;

Fig. 2 die Ansicht A des Brennstoffaustrittes des Brenners nach Fig. 1;

Fig. 3 einen Schnitt durch einen Brenner zur Durchführung des Verfahren mit indirekt, über die Strahlungswärme des Ofens vorgewärmten Hauptsauerstoffstrom in konzentrisch angeordneten Zuleitungskanälen;

Fig. 4 einen Schnitt durch einen wassergekühlten Brenner mit externer Sauerstoff (O$_2$)-Vorwärmung für den Hauptsauerstoffstrom;

Fig. 5 ein Diagramm zur Veranschaulichung der auftretenden NOx-Bildung in Abhängigkeit von der Erdgasqualität und der Prozeßtemperatur.

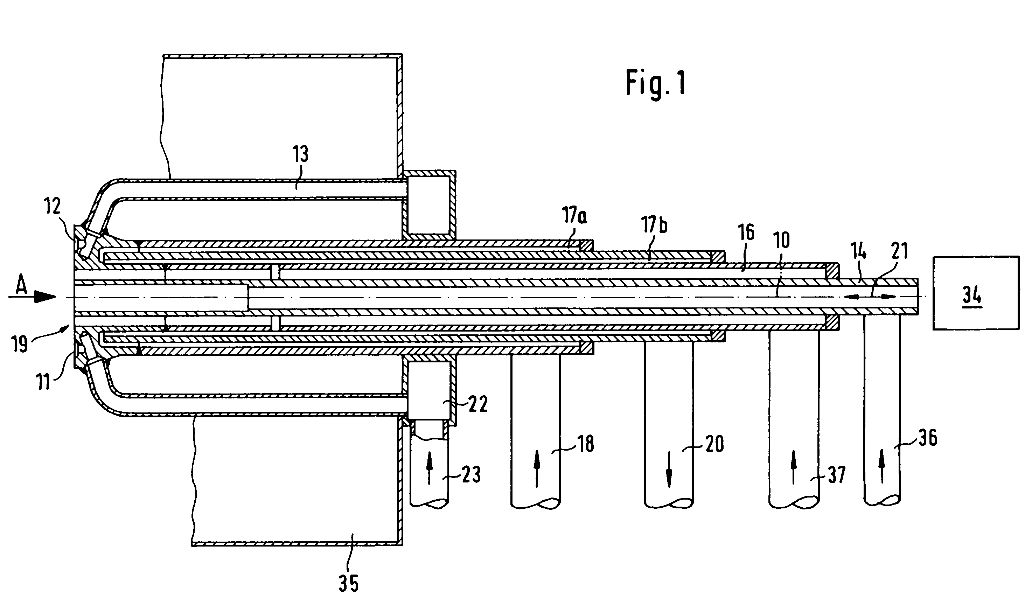

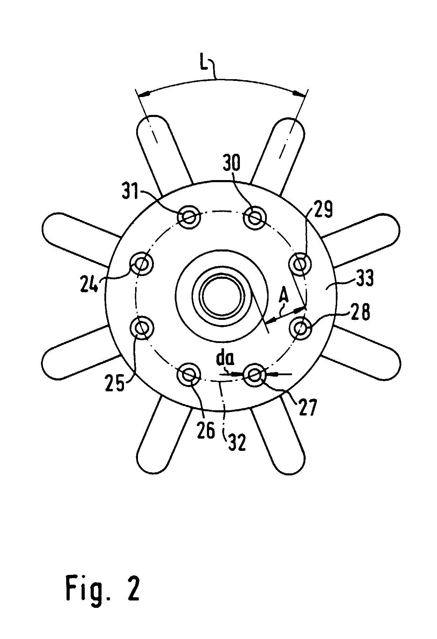

Bei den in Fig. 1, 3 und 4 dargestellten Brennern sind gleiche Teile mit gleichen Bezugsziffern versehen worden. Der in Fig. 1 dargestellte Brenner besteht aus einem zentralen Zuleitungskanal 14 für den Primärsauerstoffstrom der auf der Mittelachse 10 des wassergekühlten Zuleitungskanals 16 für Brennstoffstrom angeordnet ist und somit von dem Zuleitungskanal 16 konzentrisch umgeben ist. Der Zuleitungskanal 14 ist entsprechend den Pfeilen 21 im Zuleitungskanal 16 für den Brennstoffstrom verschiebbar angeordnet und schließt bevorzugt auf einer Ebene mit dem Austritt des Zuleitungskanals 16 für Brennstoffstrom ab. Der Zuleitungskanal 16 für den Brennstoffstrom ist von Zuleitungskanälen 17a, 17b für ein Kühlmedium, vorzugsweise Wasser, konzentrisch umgeben. Das Kühlmedium strömt über Leitung 18 in den Zuleitungskanal 17a, wird bis in unmittelbare Nähe des Austritts 19 des Brennstoffstromes geführt, hier umgelenkt und strömt über die Leitung 20 aus dem Zuleitungskanal 17b. Außerhalb des wassergekühlten Zuleitungskanales 16 für den Brennstoffstrom sind Zuleitungskanäle 13 für Hauptsauerstoff angeordnet. Die Zuleitungskanäle 13 sind über einen Ringkanal 22 und Leitung 23 an eine nicht näher dargestellte Versorgungsquelle für Sauerstoff angeschlossen. Wie Fig. 1 und Fig. 2 zeigen sind die Zuleitungskanäle 13 für den Hauptsauerstoffstrom mit seitlichem Abstand zu den Zuleitungskanälen 17a, 17b für Kühlmittel angeordnet.

Die in den Fig. 1 und 2 dargestellten acht Zuleitungskanäle 13 bestehen aus separaten Rohren und verlaufen ausgehend von dem Ringkanal 22 im wesentlichen parallel zur Mittelachse 10 bis in die Nähe des Austritts 19 des Brennstoffstromes, biegen hier ab und münden jeweils in die in einem Düsenkörper 33 angeordneten acht Hauptsauerstoffdüsen 24 bis 31. Vorteilhaft sind mindestens zwei, vorzugsweise mindestens vier Hauptsauerstoffdüsen auf einem Kreis 32 vorgesehen. Die Austrittskanäle 11, 12 (Fig. 1) der Hauptsauerstoffdüsen verlaufen parallel zu dem Austrittskanal 9 des wassergekühlten Zuleitungskanals 16 für den Brennstoffstrom und haben einen Mindestachsabstand L voneinander der ein vielfaches, vorzugsweise mindestens das 3-fache, des Düsendurchmessers $d_a$ der Hauptsauerstoffdüsen beträgt. Die Düsen 24 bis 31 für den Hauptsauerstoffstrom haben einen auf die Verbrennungsleistung bezogenen Austrittsquerschnitt F von mindestens 350 mm$^2$/MW, wobei die vorzugsweise mindestens vier im Kreis 32 um den wassergekühlten Zuleitungskanal 16 für den Brennstoffstrom angeordneten Austrittskanäle 11, 12 für den Hauptsauerstoffstrom einen Durchmesser $d_a$ haben, der größer als der durch die Formel

$$d_a = 1{,}13 \left(\frac{F}{\eta}\right)^{\frac{1}{2}}$$

bestimmte Wert ist, wobei $d_a$ in mm gemessen ist, F in mm$^2$/MW und $\eta$ die Anzahl der Austrittskanäle der Hauptsauerstoffdüsen ist. Der wassergekühlte Zuleitungskanal 16 hat am Austritt 19 des Brennstoffes einen Abstand A zu den Austrittskanälen 11, 12 der Hauptsauerstoffdüsen 24 bis 31 der einen durch die Ungleichung

$$A < 3{,}9\, d_a$$

bestimmten Wert hat, wobei $d_a$ der Durchmesser der Austrittskanäle 11, 12 der Hauptsauerstoffdüsen ist.

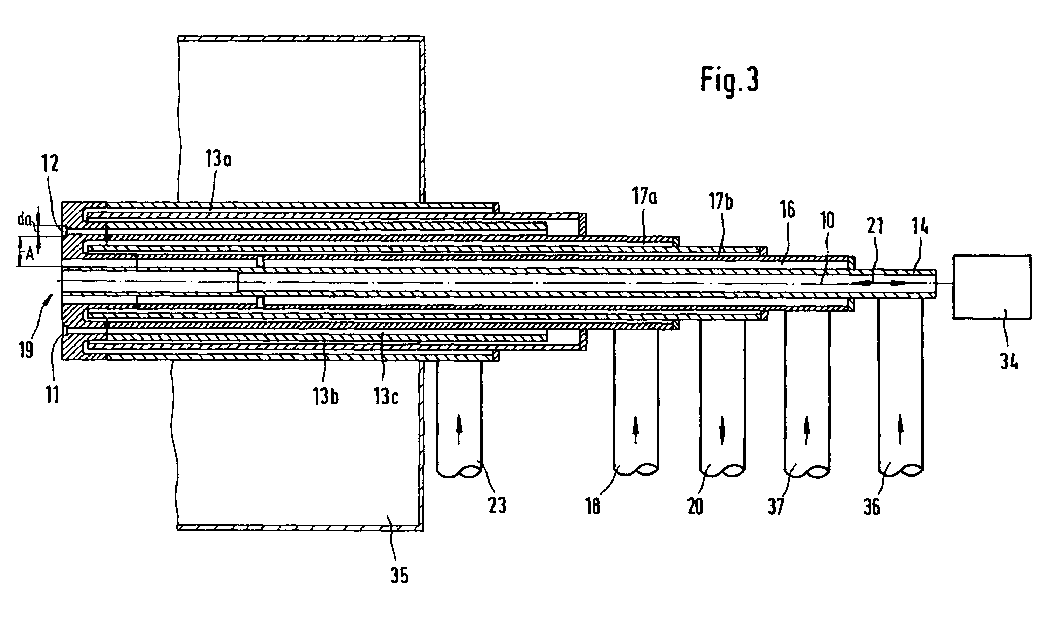

Der Brenner ist in einem abgeschlossenen Verbrennungsraum 35 angeordnet. Über Leitung 36 strömt ein Primärsauerstoffstrom in den Zuleitungskanal 14 und über Leitung 37 ein Brennstoffstrom in den wassergekühlten Zuleitungskanal 16. Der Austrittskanal 9 für den Brennstoffstrom ist dabei nach einem nicht näher dargestellten Ausführungsbeispiel als sich zum Austritt 19 hin verengende, den Brennstoffstrom einschnürende Düse ausgebildet. Die Geschwindigkeit des Primärsauerstoffstromes liegt zwischen 1,5 und 10 m/s und des gasförmigen Brennstoffstromes zwischen 15 und 75 m/s. Der Anteil des Primärsauerstoffes beträgt mindestens 0,4 % der stöchiometrisch benötigten Menge des Oxidationsgases. Nach dem Zünden teilverbrennt Brennstoff mit dem Primärsauerstoff. Es bildet sich eine stabile Zündflamme, die ein ausreichendes Signal für einen vorzugsweise als UV-Lichtempfänger 34 ausgebildeten Sensor abgibt, der zur Überwachung des Brenners an eine Auswerteeinheit angeschlossen ist. Der Primärsauerstoffstrom strömt mit einer Temperatur < 30°C in den Zuleitungskanal 14. Der Hauptsauerstoffstrom wird vor der Oxidation mit dem Brennstoff auf eine Temperatur von mindestens 100°C vorgewärmt. Die Vorwärmung erfolgt bei Brennern gemäß den Ausführungsbeispielen in Fig. 1 und 3 über die Strahlungswärme der Verbrennungsabgase. Hierzu sind die Zuleitungskanäle 13 für den Hauptsauerstoff außenliegend und wie beim Brenner gemäß Fig. 1 dargestellt, mit seitlichem Abstand von den Zuleitungskanälen 17a, 17b für Kühlmittel angeordnet, so daß sie von allen Seiten frei von der Strahlungswärme beaufschlagt sind. Bei dem Brenner nach Fig. 3 strömt in den außenliegenden, von der Strahlungswärme der Verbrennungsabgase beaufschlagten Zuleitungskanal 13a über Leitung 23 der Hauptsauerstoff. Über parallel zur Mittelachse 10 verlaufende Zuleitungskanäle 13b, 13c wird der Hauptsauerstoffstrom umgelenkt, bevor er aus den Hauptsauerstoffdüsen 24 bis 31 austritt.

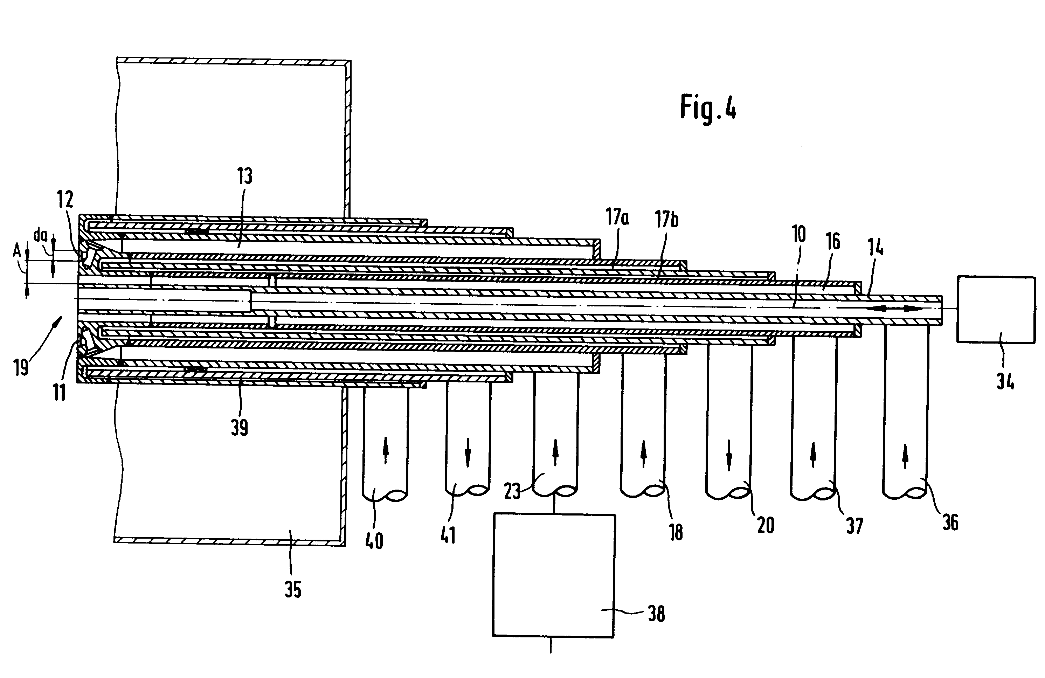

Bei dem in Fig. 4 dargestellten Brenner ist über Leitung 23 für den Hauptsauerstoff eine Einrichtung 38 zur Vorwärmung angeschlossen, mittels der der Hauptsauerstoff auf mindestens 100°C vorgewärmt wird. Unterschiedlich zu den Brennern nach Fig. 1 und 3 ist der Zuleitungskanal 13 für den Hauptsauerstoff von einem Zuleitungskanal 39 für ein Kühlmedium umgeben, das über Leitung 40 in den Zuleitungskanal 39 strömt, im Bereich des Austritts 19 des Brennstoffes umgelenkt wird und über Leitung 41 aus dem Brenner geleitet wird. Dieser Brenner kann bei hohen Ofentemperaturen betrieben werden.

Der aus den Hauptsauerstoffdüsen 24 bis 31 der Fig. 1 bis 4 der Brenner austretende Hauptsauerstoffstrom strömt mit einem auf die Verbrennungsleistung bezogenen Impulsstrom bei stöchiometrischer Verbrennung von mindestens 23,6 N/MW und einer Geschwindigkeit von größer 310 m/s. Er bewirkt eine intensive Rezirkulation der Verbrennungsabgase, die sich mit dem Hauptsauerstoffstrom und dem Brenngas- und Primärsauerstoffstrom mischen. Der auf die Verbrennungsleistung bezogene Brennstoff-Impulsstrom von mindestens 0,5 N/MW am Austritt 19 liegt dabei in Abhängigkeit von der Brennstoffart zwischen 2 % und 30 %, vorzugsweise zwischen 2 % und 18 % des Impulsstromes des Oxidationsgases. Es findet eine schadstoffarme, insbesondere NOx-arme Oxidation statt, bedingt durch den Abbau von Temperaturspitzen sowie durch ein gleichmäßiges Temperaturfeld ÷ der Flamme. Desweiteren werden durch die erfindungsgemäße Ausbildung des wassergekühlten Zuleitungskanals 16 für Brennstoff und den auf die Verbrennungsleistung bezogenen Brennstoff-Impulsstrom in Kombination mit der Primärsauerstofftemperatur ≤ 30°C sowie den geringen Anteil des Primärsauerstoffes von < 1 % der stöchiometrisch benötigten Sauerstoffmenge Temperaturspitzen ÷ der Flammenwurzel vermieden. Vorteilhaft beträgt der Sauerstoffgehalt des Oxidationsgases mindestens 90 %.

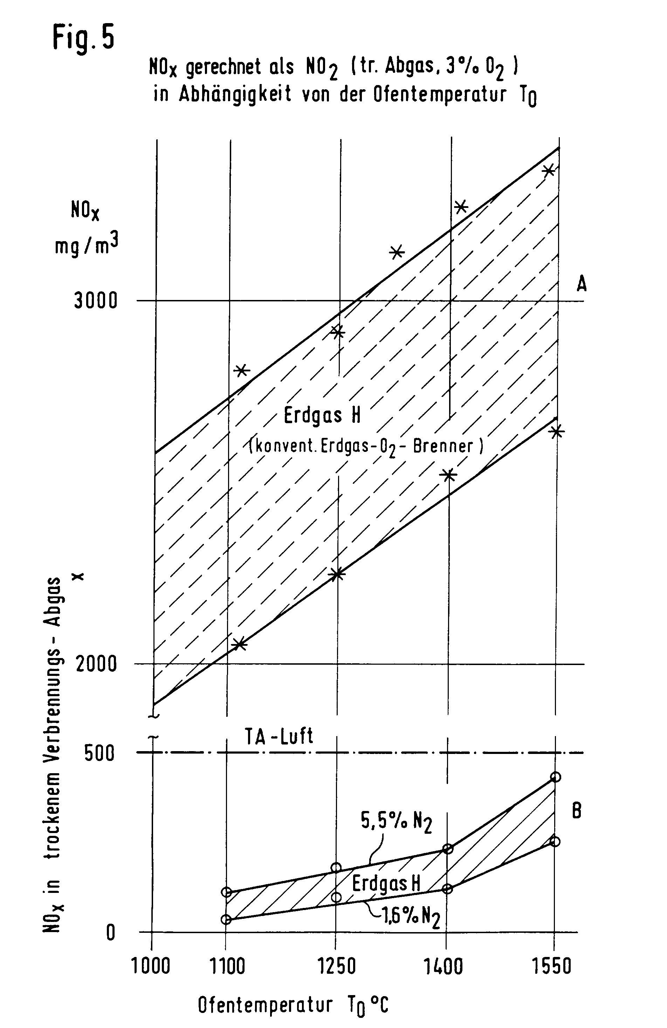

Die in den Ausführungsbeispielen im Zusammenhang mit den Fig. 1 bis 4 beschriebenen Brenner zur Durchführung des Verfahrens zeichnen sich dadurch aus, daß die Stickoxidemissionen drastisch reduziert werden. Im Diagramm nach Fig. 5 ist der NOx-Anteil an trockenem Verbrennungsabgas in Abhängigkeit von der Ofentemperatur dargestellt.

Der schraffiert dargestellte Bereich A veranschaulicht die NOx-Emissionen bei konventionellen Erdgas/Sauerstoff-Brennern, die ohne Maßnahmen zur NOx-Minderung arbeiten. Im gesamten Temperaturbereich liegen die NOx-Emissionen weit über den Grenzwert der TA-Luft von 500 mg/m³.

Die Ergebnisse der NOx-Emissionen des erfindungsgemäßen Verfahrens sind im schraffierten Bereich B in Abhängigkeit von der Erdgasqualität und der Ofentemperatur dargestellt. Wie die Fig. 5 zeigt, ergeben sich bei dem nach dem erfindungsgemäßen Verfahren arbeitenden Brennern wesentlich günstigere Verhältnisse, wobei eine deutliche Unterschreitung des TA-Luft-Grenzwertes erreicht wird.

Noch deutlicher werden die Senkungsraten bei Anwendung des erfindungsgemäßen Verfahrens für die Schadgase NOx und CO, wenn die Emissionen auf die Enthalpie bezogen werden. Die Grenzwerte nach TA-Luft betragen für NOx ca. 450 mg/kWh und für CO ca. 90 mg/kWh. Die Istwerte der unteren Kurve des Bereiches B liegen für NOx zwischen 3,5 und 28 mg/kWh und für CO zwischen 6,0 und 18 mg/kWh. Daraus ergibt sich, daß mit dem erfindungsgemäßen Verfahren niedrigste Schadgasemissionen bei gleichzeitig wirtschaftlicher Energieausnutzung entstehen.

**Patentansprüche**

1. Verfahren zur Reduzierung von Schadgasemissionen bei der Verbrennung von Brennstoff in einem Verbrennungsraum, bei dem der Brennstoff mit einem überwiegend sauerstoffhaltigen Oxidationsmittel in Gegenwart rezirkulierter Verbrennungsabgase oxidiert wird und bei dem das Oxidationsmittel in einen Hauptsauerstoffstrom und einen Primärsauerstoffstrom aufgeteilt wird, dadurch gekennzeichnet, daß

- der Hauptsauerstoffstrom, bevor er an der Oxidation des Brennstoffs teilnimmt, auf eine Temperatur von mindestens 100 °C vorgewärmt und ein auf die Verbrennungsleistung bezogener Impulsstrom des Hauptsauerstoffstromes bei stöchiometrischer Verbrennung von mindestens 23,6 N/MW erzeugt wird, wobei die Geschwindigkeit des Hauptsauerstoffstromes größer als 310 m/s ist;
- der Brennstoff in einem vorzugsweise wassergekühlten Zuleitungskanal als Brennstoffstrom der Verbrennung zugeführt und ein auf die Verbrennungsleistung bezogener Brennstoff-Impulsstrom in N/MW am Austritt in Abhängigkeit von der Brennstoffart zwischen 2% bis 30%, vorzugsweise zwischen 2% bis 18%, des Hauptsauerstoff-Impulsstroms erzeugt wird, wobei die Geschwindigkeit des Brennstoffstromes zwischen 15 und 75 m/s liegt;
- der Primärsauerstoffstrom mit einer Temperatur kleiner oder gleich 30 °C auf der Mittelachse des Brennstoffzuleitungskanals zugeführt wird, wobei der Anteil kleiner 1%, vorzugsweise 0,4%, der stöchimetrisch benötigten Sauerstoffmenge beträgt und wobei die Geschwindigkeit des Primärsauerstoffstromes zwischen 1,5 und 10 m/s liegt und der Primärsauerstoffstrom mit dem austretenden Brennstoff teiloxidiert und anschließend mit dem Hauptsauerstoffstrom und rezirkulierten Verbrennungsabgasen vermischt wird.

2. Verfahren nach Anspruch 1, dadurch gekennzeichnet, daß der Hauptsauerstoffstrom vom Brennstoffstrom einen Abstand A hat, der sich vom Außenrand des Brennstoffstromes zum Außenrand des Hauptsauerstoffstromes am Austritt ergibt und den durch die Ungleichung

$$A < 3,9 \, d_a$$

bestimmten Wert hat, wobei $d_a$ der Durchmesser des Hauptsauerstoffstromes am Austritt ist.

3. Verfahren nach Anspruch 1 oder 2, dadurch gekennzeichnet, daß der Hauptsauerstoffstrom einen auf die Verbrennungsleistung bezogenen Austrittsquerschnitt von mindestens 350 mm²/MW aufweist.

4. Verfahren nach einem der Ansprüche 1 bis 3, dadurch gekennzeichnet, daß der Sauerstoffgehalt im Oxidationsmittel mindestens 90 % beträgt.

**5.** Verfahren nach einem der Ansprüche 1 bis 4,
dadurch gekennzeichnet,
daß der Hauptsauerstoffstrom mittels der Strahlungsenergie der Verbrennungsabgase vorgewärmt wird.

**6.** Verfahren nach einem der Ansprüche 1 bis 4,
dadurch gekennzeichnet,
daß der Hauptsauerstoffstrom mittels einer externen Vorwärmeinrichtung vorgewärmt wird.

**7.** Verfahren nach einem der Ansprüche 1 bis 6,
dadurch gekennzeichnet,
daß der Hauptsauerstoffstrom aus mindestens 2, vorzugsweise mindestens 4, im Kreis um den wassergekühlten Zuleitungskanal für Brennstoff angeordneten Düsen der Verbrennung zugeführt wird.

**8.** Brenner zur Durchführung des Verfahrens nach einem der vorgenannten Ansprüche 1 bis 7, bei dem der Brennstoff mit einem überwiegend sauerstoffhaltigen Oxidationsmittel in Gegenwart rezirkulierter Verbrennungsabgase in einem Verbrennungsofen oxidiert wird, mit Düsen für einen Hauptsauerstoffstrom zur Rezirkulation der Verbrennungsabgase und einem Primärsauerstoffstrom,
dadurch gekennzeichnet, daß

- die Düsen (24 bis 31) für den Hauptsauerstoffstrom einen auf die Verbrennungsleistung bezogenen Impulsstrom von 23,6 N/MW und eine Geschwindigkeit des Hauptsauerstoffstromes größer als 310 m/s erzeugen;
- die Düsen (24 bis 31) für den Hauptsauerstoffstrom einen auf die Verbrennungsleistung bezogenen Austrittsquerschnitt F von mindestens 350 mm$^2$/MW haben, wobei mindestens 2, vorzugsweise mindestens 4 Düsen, für den Hauptsauerstoffstrom im Kreis (32) um einen vorzugsweise wassergekühlten Zuleitungskanal (16) für Brennstoff angeordnet sind und einen Durchmesser $d_a$ haben, der größer als der durch die Formel

  -
  $$d_a = 1,13 \, (F/n)^{1/2}$$

  bestimmte Wert ist, wobei $d_a$ in mm gemessen ist, F in mm$^2$/MW und n die Anzahl der Düsen ist;
- eine Einrichtung (13, 38) zur Vorwärmung des Hauptsauerstoffstroms vorgesehen ist, die den Hauptsauerstoffstrom auf mindestens 100 °C aufheizt;
- der Zuleitungskanal (16) für Brennstoff am Austritt (19) einen auf die Verbrennungsleistung bezogenen Impulsstrom von mindestens 0,5 N/MW und eine Geschwindigkeit des Brennstoffstromes zwischen 15 und 75 m/s erzeugt;
- der Zuleitungskanal (14) für den Primärsauerstoffstrom auf der Mittelachse (10) des Zuleitungskanals (16) für Brennstoff angeordnet ist und am Austritt (19) einen Querschnitt aufweist, der bei einem Oxidationsverhältnis kleiner 1%, vorzugsweise 0,4%, der stöchimetrisch benötigten Sauerstoffmenge eine Geschwindigkeit von mindestens 1,5 m/s erzeugt, wobei der Primärsauerstoffstrom am Austritt (19) mit dem austretenden Brennstoff teiloxidiert und sich anschließend mit dem Hauptsauerstoffstrom und rezirkuliertem Verbrennungsabgas vermischt.

**9.** Brenner nach Anspruch 8,
dadurch gekennzeichnet, daß
der wassergekühlte Zuleitungskanal (16) für Brennstoff am wassergekühlten Austritt (19) einen Abstand A zu den Düsen (24 bis 31) für den Hauptsauerstoffstrom hat, wobei A vom Außendurchmesser des Zuleitungskanals (16) für Brennstoff zum Außendurchmesser der Düsen (24 bis 31) am Austritt (19) gemessen ist und einen Wert hat, der kleiner als 3,9 $d_a$ ist.

**10.** Brenner nach Anspruch 8 oder 9 ,
dadurch gekennzeichnet, daß
der Mindestachsabstand L benachbarter Düsen (24 bis 31) für den Hauptsauerstoffstrom ein vielfaches, vorzugsweise mindestens das 3-fache des Düsendurchmessers $d_a$ beträgt.

**11.** Brenner nach einem der Ansprüche 8 bis 10,
dadurch gekennzeichnet,
daß die Austrittskanäle (11, 12) der Düsen (24 bis 31) für den Hauptsauerstoffstrom parallel zu dem Austrittskanal (9) des wassergekühlten Zuleitungskanals (16) für Brennstoff angeordnet sind.

**12.** Brenner nach einem der Ansprüche 8 bis 11,
dadurch gekennzeichnet,
daß der Zuleitungskanal (14) für den Primärsauerstoffstrom im wassergekühlten Zuleitungskanal (16) für Brennstoff verschiebbar ausgebildet ist und der Austritt des Zuleitungskanals (14) für den Primärsauerstoffstrom, vorzugsweise mit dem Austritt des wassergekühlten Zuleitungskanals (16) für Brennstoff abschließt.

**13.** Brenner nach einem der Ansprüche 8 bis 12,
dadurch gekennzeichnet,
daß der wassergekühlte Zuleitungskanal (16) als zum Austritt des Brennstoffes sich verengende und den Brennstoffstrom einschnürende Düse ausgebildet ist.

**14.** Brenner nach einem der Ansprüche 8 bis 13, dadurch gekennzeichnet, daß der Zuleitungskanal (14) für den Primärsauerstoffstrom mit einem Sensor (34), vorzugsweise einem UV-Lichtempfänger, zur Erfassung von Flammenzuständen verbunden ist, der an eine Auswerteinheit (8) zur Flammenüberwachung angeschlossen ist.

**Claims**

**1.** A method for reducing pollutant gas emissions in the combustion of fuel in a combustion chamber, in which method the fuel is oxidized with a predominantly oxygen-containing oxidizing agent in the presence of recirculated combustion exhaust gases and in which the oxidizing agent is divided into a main oxygen stream and a primary oxygen stream, which comprises

- preheating the main oxygen stream to a temperature of at least 100°C before it participates in the oxidation of the fuel and generating a combustion-power-related impulse stream of the main oxygen stream at stoichiometric combustion of at least 23.6 N/MW, the velocity of the main oxygen stream being greater than 310 m/s;
- feeding the fuel to the combustion as a fuel stream in a preferably water-cooled feed channel and generating a combustion-power-related fuel impulse stream in N/MW at the outlet, depending on the type of fuel, between 2% and 30%, preferably between 2% and 18%, of the main oxygen impulse stream, the velocity of the burner stream being between 15 and 75 m/s;
- feeding the primary oxygen stream at a temperature of less than or equal to 30°C, the proportion being on the central axis of the fuel feed canal 1%, preferably 0.4%, of the stoichiometrically required oxygen rate and less than the velocity of the primary oxygen stream being between 1.5 and 10 m/s and the primary oxygen stream partially burning with the exiting fuel and then being mixed with the main oxygen stream and recirculated combustion exhaust gases.

**2.** The method as claimed in claim 1, wherein the main oxygen stream has a spacing A from the fuel stream, which spacing is given from the outer rim of the fuel stream to the outer rim of the main oxygen stream at the outlet and has the value defined by the inequality

$$A < 3.9 \, d_a,$$

$d_a$ being the diameter of the main oxygen stream at the outlet.

**3.** The method as claimed in claim 1 or 2, wherein the main oxygen stream has a combustion-power-related outlet cross-sectional area of at least 350 mm$^2$/MW.

**4.** The method as claimed in one of claims 1 to 3, wherein the oxygen content in the oxidizing agent is at least 90%.

**5.** The method as claimed in one of claims 1 to 4, wherein the main oxygen stream is preheated by means of the radiant energy of the combustion exhaust gases.

**6.** The method as claimed in one of claims 1 to 4, wherein the main oxygen stream is preheated by means of an external preheating device.

**7.** The method as claimed in one of claims 1 to 6, wherein the main oxygen stream is fed to the combustion from at least 2, preferably at least 4, nozzles arranged in a circle about the water-cooled feed channel for fuel.

**8.** A burner for carrying out the method as claimed in one of the preceding claims 1 to 7, in which burner the fuel is oxidized by a predominantly oxygen-containing oxidizing agent in the presence of recirculated combustion exhaust gases in a combustion furnace having nozzles for a main oxygen stream to recirculate the combustion exhaust gases and for a primary oxygen stream, which comprises

- the nozzles (24 to 31) for the main oxygen stream generating a combustion-power-related impulse stream of 23.6 N/MW and a velocity of the main oxygen stream of greater than 310 m/s;
- the nozzles (24 to 31) for the main oxygen stream having a combustion-power-related outlet cross-sectional area F of at least 350 mm$^2$/MW, at least 2, preferably at least 4, nozzles for the main oxygen stream being arranged in a circle (32) about a preferably water-cooled feed channel (16) for fuel and. having a diameter $d_a$ which is greater than the value defined by the formula

$$d_a = 1.13 \left(\frac{F}{\eta}\right)^{1/2},$$

$d_a$ being measured in mm, F in mm$^2$/MW and n being the number of nozzles;
- a device (13, 38) for preheating the main oxygen stream being provided which heats the main oxygen stream to at least 100°C;

- the feed channel (16) for fuel generating at the outlet (19) a combustion-power-related impulse stream of at least 0.5 N/MW and a velocity of the fuel stream of between 15 and 75 m/s;
- the feed channel (14) for the primary oxygen stream being arranged on the central axis (10) of the feed channel (16) for fuel and having at the outlet (19) a cross-sectional area which generates at an oxidation ratio of less than 1% preferably 0.4%, of the stoichiometrically required oxygen rate a velocity of at least 1.5 m/s, the primary oxygen stream partially burning at the outlet (19) with the exiting fuel and then mixing with the main oxygen stream and recirculated combustion exhaust gas.

9. The burner as claimed in claim 8, wherein the water-cooled feed channel (16) for fuel has at the water-cooled outlet (19) a spacing A from the nozzles (24 to 31) for the main oxygen stream, A being measured from the outer diameter of the feed channel (16) for fuel to the outer diameter of the nozzles (24 to 31) at the outlet (19) and having a value which is less than 3.9 $d_a$.

10. The burner as claimed in claim 8 or 9, wherein the minimum axial spacing L of adjacent nozzles (24 to 31) for the main oxygen stream is a multiple of, preferably at least 3 times, the nozzle diameter $d_a$.

11. The burner as claimed in one of claims 8 to 10, wherein the outlet channels (11, 12) of the nozzles (24 to 31) for the main oxygen stream are arranged in parallel to the outlet channel (9) of the water-cooled feed channel (16) for fuel.

12. The burner as claimed in one of claims 8 to 11, wherein the feed channel (14) for the primary oxygen stream is designed to be able to slide in the water-cooled feed channel (16) for fuel and the outlet of the feed channel (14) for the primary oxygen stream preferably ends with the outlet of the water-cooled feed channel (16) for fuel.

13. The burner as claimed in one of claims 8 to 12, wherein the water-cooled feed channel (16) is designed as a nozzle tapering toward the outlet of the fuel and constricting the fuel stream.

14. The burner as claimed in one of claims 8 to 13, wherein the feed channel (14) for the primary oxygen stream is joined to a sensor (34), preferably a UV light receiver, for determining flame conditions, which sensor is connected to an evaluation unit (8) for flame monitoring.

**Revendications**

1. Procédé de réduction des émissions de gaz nocifs lors de la combustion de combustible dans une enceinte de combustion, selon lequel on oxyde le combustible avec un agent d'oxydation contenant principalement de l'oxygène en présence de gaz de combustion remis en circulation et selon lequel l'agent d'oxydation est réparti en un flux d'oxygène principal et un flux d'oxygène secondaire, caractérisé en ce que

- le flux d'oxygène principal est préchauffé à une température d'au moins 100°C avant de participer à l'oxydation du combustible et on génère un flux impulsionnel d'oxygène principal, rapporté à la puissance de combustion pour une combustion stoechiométrique d'au moins 23,6 N/MW, la vitesse du flux principal d'oxygène étant supérieure à 310 m/s,
- on fournit le combustible à un canal d'alimentation de préférence refroidi par de l'eau comme flux de combustible pour la combustion et on génère un flux impulsionnel de combustible rapporté à la puissance de combustion en N/MW à la sortie en fonction du type de combustible, compris entre 2 % et 30 % et de préférence entre 2 % et 18 % du flux impulsionnel d'oxygène principal, la vitesse du flux de combustible se situe entre 15 et 75 m/s,
- on fournit le flux d'oxygène primaire à une température inférieure ou égale à 30°C suivant l'axe du canal d'alimentation en combustible, la teneur étant inférieure à 1 % et de préférence égale à 0,4 % de la quantité d'oxygène stoechiométrique nécessaire, et la vitesse du flux d'oxygène primaire est comprise entre 1,5 et 10 m/s et le flux d'oxygène primaire est oxydé partiellement avec le combustible sortant puis il est mélangé avec le flux d'oxygène principal et les gaz de combustion remis en circulation.

2. Procédé selon la revendication 1, caractérisé en ce que le flux principal d'oxygène est à une distance (A) du flux de combustible, mesurée entre le bord de sortie du flux de combustible et le bord de sortie du flux d'oxygène principal à la sortie, dont la valeur est définie par l'inégalité :

$$A < 3,9 \ d_a$$

relation dans laquelle $d_a$ est le diamètre du flux d'oxygène principal à la sortie.

3. Procédé selon la revendication 1 ou 2, caractérisé en ce que

le flux principal d'oxygène a une section de sortie rapportée à la puissance de combustion d'au moins 350 mm$^2$/MW.

4. Procédé selon l'une quelconque des revendications 1 à 3,
caractérisé en ce que
la teneur en oxygène dans l'agent d'oxydation correspond à au moins 90 %.

5. Procédé selon l'une quelconque des revendications 1 à 4,
caractérisé en ce que
le flux principal d'oxygène est préchauffé avec l'énergie de rayonnement des gaz de combustion.

6. Procédé selon l'une quelconque des revendications 1 à 4,
caractérisé en ce que
le flux principal d'oxygène est préchauffé à l'aide d'une installation de préchauffage externe.

7. Procédé selon l'une des revendications 1 à 6,
caractérisé en ce que
le flux principal d'oxygène est fourni par au moins deux, de préférence au moins quatre buses réparties en cercle autour du canal d'alimentation de combustible refroidi par de l'eau, pour alimenter la combustion.

8. Brûleur pour la mise en oeuvre du procédé selon l'une des revendications précédentes 1 à 7, selon lequel le combustible est oxydé avec un agent d'oxydation contenant principalement de l'oxygène en présence de gaz de combustion remis en circulation dans le four de combustion, comprenant des buses pour un flux principal d'oxygène pour la remise en circulation des gaz de combustion et un flux d'oxygène primaire,
caractérisé en ce que

• les buses (24-31) du flux principal d'oxygène ont un flux impulsionnel rapporté à la puissance de combustion de 23,6 N/MW et une vitesse du flux principal d'oxygène supérieure à 310 m/s,
• les buses (24-31) du flux principal d'oxygène ont une section de sortie F rapportée à la puissance de combustion d'au moins 350 mm$^2$/MW avec au moins deux, de préférence au moins quatre buses pour le flux d'oxygène principal, réparties sur un cercle (32) autour d'un canal d'alimentation (16) refroidi de préférence par de l'eau pour le combustible, ayant un diamètre da supérieur à la valeur donnée par la formule suivante :

$$d_a = 1,13 \, (F/n)^{1/2}$$

dans laquelle $d_a$ est mesuré en mm, F en mm$^2$/MW et n est le nombre de buses,
• une installation (13, 38) pour préchauffer le flux principal d'oxygène réchauffe ce flux principal d'oxygène à au moins 100°C,
• le canal d'alimentation (16) de combustible présente à la sortie 19, un flux impulsionnel rapporté à la puissance de combustion d'au moins 0,5 N/MW et une vitesse du flux de combustible comprise entre 15 et 75 m/s,
• le canal d'alimentation (14) du flux primaire d'oxygène est prévu sur l'axe (10) du canal d'alimentation (16) de combustible et présente à la sortie (19), une section qui pour un rapport d'oxydation inférieur à 1 % et de préférence 0,4 % de la quantité d'oxygène stoechiométrique nécessaire, génère une vitesse d'au moins 1,5 m/s, le flux d'oxygène primaire à la sortie (19) étant mélangé avec le combustible sortant, partiellement oxydé puis se mélangeant ensuite avec le flux d'oxygène principal et les gaz de combustion remis en circulation.

9. Brûleur selon la revendication 8,
caractérisé en ce que
le canal d'alimentation (16) refroidi par de l'eau pour le combustible présente à la sortie (19) refroidie par de l'eau, une distance A par rapport aux buses (24-31) pour le flux d'oxygène principal, A étant mesuré entre le diamètre extérieur du canal d'alimentation (16) de combustible jusqu'au diamètre extérieur des buses (24-31) à la sortie (19) et ayant une valeur inférieure à 3,9 $d_a$.

10. Brûleur selon la revendication 8 ou 9,
caractérisé en ce que
la distance minimale L des buses voisines (24-31) pour le flux d'oxygène principal est un multiple de préférence au moins égal à 3 du diamètre des buses $d_a$.

11. Brûleur selon l'une quelconque des revendications 8 à 10,
caractérisé en ce que
les canaux de sortie (11, 12) des buses (24-31) du flux d'oxygène principal sont parallèles au canal de sortie (9) du canal d'alimentation de combustible, refroidi par de l'eau (16).

12. Brûleur selon l'une quelconque des revendications 8 à 11,
caractérisé en ce que
le canal d'alimentation (14) du flux d'oxygène primaire est coulissant dans le canal d'alimentation (16) refroidi par de l'eau pour le combustible et la sortie du canal d'alimentation (14) du flux d'oxygène primaire se termine de préférence par la sortie du canal d'alimentation (16) de combustible, refroidi par de l'eau.

13. Brûleur selon l'une quelconque des revendications 8 à 12,
caractérisé en ce que
le canal d'alimentation (16) refroidi par de l'eau présente une section allant en se rétrécissant vers la sortie du combustible et forme une buse réduisant le flux de combustible.

14. Brûleur selon l'une quelconque des revendications 8 à 13,
caractérisé en ce que
le canal d'alimentation (14) du flux d'oxygène primaire est relié à un capteur(34) de préférence un photocapteur à ultraviolets pour saisir l'état des flammes, ce capteur étant relié à une unité d'exploitation (8) pour la surveillance des flammes.

Fig. 1

EP 0 663 562 B1

Fig. 2

Fig.3

Fig.4

EP 0 663 562 B1

# Fig. 5

NO$_x$ gerechnet als NO$_2$ (tr. Abgas, 3% O$_2$) in Abhängigkeit von der Ofentemperatur T$_0$